# EUROPEAN PATENT APPLICATION

(11) **EP 3 543 712 A1**
(43) Date of publication of application: **25.09.2019**
(21) Application number: 18163144.1
(22) Date of filing: 21.03.2018
(51) Int. Cl.: G01Q 10/04, G01Q 60/32, G01N 29/06

(54) **METHOD AND SYSTEM FOR AT LEAST SUBSURFACE CHARACTERIZATION OF A SAMPLE**

(71) Applicant: Nederlandse Organisatie voor toegepast- natuurwetenschappelijk onderzoek TNO, 2595 DA 's-Gravenhage (NL)
(72) Inventor: Sadeghian Marnani, Hamed, 2595 DA 's-Gravenhage (NL); van Reijzen, Maarten Eduard, 2595 DA 's-Gravenhage (NL); van Es, Maarten Hubertus, 2595 DA's-Gravenhage (NL)
(74) Representative: V.O.

(57) **Abstract**

Method and system for performing characterization of a sample using an atomic force microscopy system. An actuation signal is provided to a photo-thermal actuator which is configured to excite the probe by means of an optical excitation beam incident on the cantilever. The probe is configured to be bendable by means of the optical excitation beam impinging on it. The actuation signal is configured to include at least one modulation frequency. The probe tip motion is monitored for determining at least a subsurface characterization data.

## Description

### FIELD OF THE INVENTION

The invention relates to a method and system for characterization of a sample using an atomic force microscopy system. The invention further relates to an atomic force microscopy system.

### BACKGROUND TO THE INVENTION

Scanning probe microscopy (SPM), such as atomic force microscopy (AFM), can be employed for performing accurate nondestructive measurements of a surface of a sample, enabling imaging and/or visualization of sample surface elements at sub-nanometer resolution. The probe in a SPM system typically comprises a cantilever and a probe tip. Topography information and/or mechanical properties of a sample can be measured by scanning the probe tip over the surface of a sample. A position of the probe tip can be monitored by means of a sensor. When a SPM is operated in a dynamic operation mode, the cantilever is vibrated during scanning thereof across the surface. Typically the probe is actuated by means of a piezoelectric transducer that is connected to the probe holder, which houses the probe. Typically, the probe is mounted in a (removable) holder, which is placed on a receptacle in the AFM system. The receptacle can have a dither piezo underneath for example.

The need for characterization of subsurface features of samples is becoming ever more important. AFM can also be used for providing subsurface characterization of samples, enabling measurement of nanostructures which may be embedded below the surface of the sample. Different approaches are known for determining subsurface features in the sample, using AFM. For example, in ultrasonic force microscopy (UFM), a sample is acoustically excited at ultrasonic frequencies above a contact resonance frequency of the probe. The nonlinear nature of the tip-sample interaction can cause the cantilever to experience an effective (time-averaged) force depending on an amplitude and force-indentation relationship. Monitoring the (time-averaged) force on the cantilever as a function of an ultrasound amplitude allows for the visualization of subsurface features. UFM utilizes an increased mechanical impedance at high frequencies to introduce large indentations, the effects of which are measured at low frequencies. In contact resonance scanning probe microscopy (CR-SPM), a sensitivity of the shift in the contact resonance frequency to the material properties in an extended volume around the tip-sample contact is utilized for subsurface imaging. In subsurface ultrasonic resonance force microscopy (SSURFM), high frequency ultrasound waves can be combined with AFM measurements to detect viscoelastic properties of subsurface features, wherein a large mechanical impedance of the cantilever at high ultrasound frequencies (cf. UFM) is combined with the sensitivity of the cantilever's resonance to the mechanical properties of the sample (cf. CR-SPM).

An excitation for enabling the above measurement techniques can be applied to the probe tip or the sample side. Typically, acoustic waves are applied to the cantilever or the probe tip by means of a piezoelectric transducer, such as a dither piezo. The piezo actuator provides ultrasound excitation, which results in unwanted resonances and reflections in the frequency response. Additionally, a high frequency piezoelectric excitation may be more difficult to achieve, for example at frequencies higher than 3GHz. Moreover, an excitation via the sample side can be rendered more difficult as a result of larger samples. For example, relatively large wafers in the semiconductor industry (e.g. around 300 mm) may not be easily excited by a piezoelectric transducer (i.e. actuator). Modifications to the existing wafer scanning stages to apply the excitation signal more effectively may also be impractical. In some approaches, the ultrasound actuation is generated using a piezoelectric transducer located below the sample, with the sample being vibrated with respect to the cantilever.

It is desired to provide a more accurate method and system for determining surface and subsurface sample information using AFM.

### SUMMARY OF THE INVENTION

It is an object of the invention to provide for a method and a system that obviates at least one of the above mentioned drawbacks.

Additionally or alternatively, it is an object of the invention to provide for a method and a system for improving the accuracy of at least the subsurface characterization of a sample.

Thereto, the invention provides for a method of performing characterization of a sample using an atomic force microscopy system comprising a probe including a cantilever and a probe tip arranged on the cantilever, and a detector for sensing a probe tip position, and wherein the system is configured for positioning the probe tip relative to the sample, wherein the method comprises the steps of: providing an actuation signal to the probe using an actuator for inducing movement between the probe tip and the sample in a direction towards and away from the sample for enabling contact between the probe tip and a surface of the sample, wherein at least during a portion of contact between the probe tip and the surface of the sample the actuation signal is adapted to vibrate the probe tip at at least one modulation frequency, and monitoring the probe tip position for obtaining an output signal indicative of a probe tip motion, for determining, using the output signal, at least a subsurface characterization data, wherein the actuator is a photo-thermal actuator configured to excite the probe by means of an optical excitation beam incident on the cantilever, wherein the probe is configured to deform as a function of heating caused by the optical excitation beam impinging on the probe, wherein the movement in a direction towards and away from the sample for enabling contact between the probe tip and the surface of the sample, and vibration of the probe tip at at least one modulation frequency are both carried out by means of the photo-thermal actuator.

Advantageously, the probe tip can be moved in and out of contact with respect to the sample using the photo-thermal actuator (e.g. laser). The photo-thermal actuator can enable movement relative to the sample for approaching and retracting, wherein additionally, at least during a portion of contact, the probe tip is also vibrated with at least one modulation frequency for enabling subsurface characterization/imaging of the sample. The photo-thermal actuator drives the probe by means of light as optical energy is absorbed by the cantilever of the probe and converted into thermal energy which can produce mechanical displacement and/or deformation of the probe. The invention is based on the insight that the amplitude-frequency response of a photo-thermally actuated cantilever is very clean, i.e. highly predictive and almost noise free as compared to different methods of actuating. This therefore greatly reduces noise that is introduced via the input signal, at all frequencies applied (e.g. MHz and GHz range). The actuation signal provided to the photo-thermal actuator can permit measurement of at least subsurface characterization data determined from the resulting interactions between the probe tip and the sample. Optionally, also topography surface characterization data is determined. The actuation signal that is applied to the photo-thermal actuator for exciting the probe may comprise various signal components. Unwanted excited resonances and reflections in the frequency response of the probe can be effectively reduced or even eliminated using the photo-thermal actuator. Typically, such unwanted features are obtained when a different type of probe actuation is employed cooperating with the probe, such as a piezoelectric actuation, an acoustic transducer, etc.

Although fine movements of the probe tip with respect to the sample can be achieved by means of the photo-thermal actuator, larger movements and/or scanning movements of the cantilever itself can be achieved by means of one or more separate actuators. Once the cantilever has sufficiently approached the surface of the sample by means of the one or more separate actuators, the photo-thermal actuator can perform enough deformation to accurately move the cantilever in and out of contact with respect to the sample surface. For example, all movements, except large Z-stroke, may be carried out by means of the photo-thermal actuator. Also modulations/vibrations can be effectively performed by means of the photo-thermal stimulation of the probe, improving control over the movement of the probe tip.

As the probe can be driven more accurately by means of the photo-thermal actuator, an improved control over the motion of the probe tip with respect to the sample can be obtained, while providing a 'top side' actuation technique instead of actuating the sample. The cantilever of the probe can be actuated directly using the actuation signal. Advantageously, the cantilever can be actuated by adding one or more modulation frequencies in the actuation signal provided to the photo-thermal actuator, instead of actuating both the sample and the probe.

Frequency and amplitude modulation(s) of the actuation signal can be applied in order to measure mechanical parameters of the sample at subsurface.

By means of the photo-thermal actuator, significant improvements of the signal-to-noise-ratio (SNR) over existing top side piezoelectric or acoustic actuation techniques employed in AFM, can be achieved. A photo-thermal excitation of the cantilever provided by the photo-thermal actuator can reduce the induced noise and enable quantitative measurement of subsurface (nano)structures. Subsurface measurements can be facilitated and/or made more accurate since mechanical noise imposed on the resulting frequency spectrum is reduced by employing the photo-thermal actuator. Advantageously, a photo-thermal actuation allows the use of a much broader range of cantilevers. For other types of actuation, a customized cantilever may be required.

The probe tip and the sample may be moved relative to each other in one or more directions parallel to the surface for scanning of the surface with the probe tip operating in continuous contact mode, a non-continuous contact mode or a periodic contact mode. The output signal may be analyzed for mapping surface (nano)structures and subsurface (nano)structures below the surface of the sample.

When a non-continuous contact mode or periodic contact mode is employed, the method allows for at least subsurface imaging with reduced shear stress on the sample surface. For example, the probe tip is photo-thermally actuated for movement towards the sample surface until contact is made. During contact with the surface of the sample, for an (arbitrary) period of time, one or more measurements can be performed. Then, the probe tip may be moved away from the sample surface by controlling the photo-thermal actuation. During non-contact, the probe can be moved parallel to the sample surface to an (arbitrary) new position. Again, an approach can be made towards the sample surface for performing one or more measurements in contact.

Per pixel, the probe tip can be brought in contact (for a period of time) with the sample surface, wherein one or more measurements can be carried out at that pixel. The time period or duration in which the probe tip is brought in contact with the sample surface can vary. Furthermore, during scanning, the duration in which the probe tip is in contact with the sample surface and the duration in which the probe tip is not in contact with the sample (e.g. during movement to the next pixel) can be different. However, these durations can also be the same.

Optionally, at least one modulation frequency corresponds to a contact resonance frequency.

Optionally, the sample surface is scanned by performing a plurality of measurements, wherein for each measurement the probe tip is brought in contact with the sample surface. The probe tip can be brought periodically in contact with the sample surface at different sample surface locations. Optionally, at least one modulation frequency is within a range in which characteristics of the output signal are indicative of the (local) visco-elastic properties of the sample at a location where the probe tip interacts with the surface. At least one modulation frequency may for example be in the range of 0.01 MHz to 100 MHz. The elastic properties may, amongst others, be dependent on the presence or absence of subsurface structures and their material composition.

Optionally, at least one modulation frequency is within a range in which a wave is obtained which is scattered at internal or subsurface structures. At least one modulation frequency may for example be in the range larger than 1 GHz.

The actuation signal may include at least one modulation frequency during a portion of contact between the probe tip and the sample surface. Applying at least one modulation frequency during at least a portion of contact allows to accurately perform different measurements during a remaining portion when the at least one modulation frequency may not be applied. In an example, only during a portion of contact between the probe tip and the sample surface, the actuation signal includes at least one modulation frequency.

The photo-thermal actuator can be provided with the actuation signal for inducing mechanical wave movements or acoustic vibrations in the probe tip at least when the probe is in contact with the surface of the sample.

Optionally, at least one modulation frequency is applied during the entire contact. Optionally, at least one modulation frequency is also applied when the probe tip is not in contact with the sample surface.

Optionally, during contact of the probe tip with the surface of the sample, a first time interval is used for performing topography characterization and a second time interval is used for performing subsurface characterization, the first time interval being different than the second time interval, wherein during the second time interval the actuation signal includes at least one modulation frequency. Optionally, only during the second time interval the actuation signal includes at least one modulation frequency.

Advantageously, a topography image and a subsurface image can be captured sequentially instead of simultaneously. As a result, it is possible to more easily decouple surface and subsurface characterization data of the sample.

Optionally, the first time interval is subsequently followed by the second time interval, or the second time interval is subsequently followed by the first time interval. The first time interval can be directly followed by the subsequent second time interval, or vice versa.

It is appreciated that the first time interval may be zero in an example. In this case there is no first time interval, so that only the second time interval is used for performing subsurface characterization.

Optionally, during contact more than two time intervals are defined. The time intervals may be distinct time intervals. In an example, plurality of time intervals are defined, wherein during one or more time intervals different frequencies are included in the actuation signal.

It is also possible that multiple modulation frequencies are applied in at least one single interval. Additionally or alternatively, a setpoint force, amplitude of modulation and/or a frequency of the actuation can be changed in subsequent time intervals.

Optionally, at least a third interval is used for performing subsurface characterization. The third interval is different than the first and second time interval. During the third time interval the actuation signal can include a frequency being different than the at least one modulation frequency in the second time interval. Optionally, at least one modulation frequency is used for obtaining at least subsurface characterization data through an elastic interaction between the probe tip and the sample, and the frequency in the third time interval is used for obtaining at least subsurface characterization data through scattering within the sample, or vice versa.

Optionally, during contact between the probe tip and the sample surface, the actuation signal is configured for changing a contact force between the probe tip and the sample for enabling subsurface characterization at a plurality of depths underneath the surface.

Optionally, a plurality of modulation frequencies are applied in at least one time interval.

Optionally, during the third interval a plurality of modulation frequencies are applied simultaneously. Subsurface ultrasonic resonance force microscopy (SSURFM) can be carried out wherein an actuation signal is applied including multiple frequencies at least in the third interval.

Optionally, during the third interval a depth of subsurface characterization is adjusted to a desired value by changing at least one modulation frequency and/or an oscillation amplitude of the vibration at at least one modulation frequency. A third interval may include for example a different setpoint force or a different amplitude of modulation both of which can help to further characterize the subsurface feature.

The probe tip can be excited and vibrated by providing a variable electric actuation signal having a time varying voltage to the photo-thermal actuator, on the basis of which an optical excitation beam (e.g. laser light) with time varying optical power incident on the probe tip is generated. The cantilever of the probe can be excited in different ways using the actuation signal. In an example, modulation is provided by means of optical power modulation with at least one predetermined modulation frequency.

The power of the photo-thermal actuator (e.g. laser) can be modulated at a frequency matching the desired excitation and at adjustable amplitude to achieve the desired cantilever oscillation amplitude. A larger deflection can be obtained by increasing the power of a laser irradiation for example. Hence, changing an intensity of the optical excitation beam can enable a desired excitation of the cantilever for inducing the desired vibrations at the probe tip. The optical excitation beam can be modulated by employing a constant component (cf. DC component), which displaces the entire cantilever, to which a varying component (cf. AC) is added configured to change the amplitude of the optical power in time.

Advantageously, the movement in a direction towards and away from the sample for enabling contact between the probe tip and the surface of the sample, and the movement resulting from the vibration of the probe tip at -at least one modulation frequency, are both carried out by means of the photo-thermal actuator. Hence, the two moving actions can be performed by the photo-thermal actuator. When a DC signal is applied, which is constant in function of time, a position of the cantilever with respect to the sample can be changed

(approach/retract). The distance to the sample can be changed by changing the DC signal. On top of the DC signal, an AC signal is applied, which may comprise one or more frequency components, in order to vibrate the probe tip (cf. at least one modulation frequency).

Optionally, the DC signal is a quasi-DC signal. The DC signal can be changed in function of time at relatively low speeds (below the resonance frequency of the cantilever) so as to for example counter drift resulting from a change in ambient conditions, such as a temperature.

Optionally, at least one of the at least one modulation frequency is varied in time. The modulation frequency can for instance be varied in time in reaction to a feedback loop between detector and actuator. A variable frequency of amplitude modulation can be obtained. Such a modulation can for instance be carried out during a measurement interval, e.g. in a measurement interval. In order to map subsurface features, a change in contact resonance frequency as a function of position on the sample surface can be recorded. The modulation frequencies on a carrier frequency can be adjusted, using the feedback loop, so as to perform frequency tracking of the contact resonance frequency.

In an example, a modulation is applied to the actuator, with a frequency that is several times higher than the contact resonance, which is the carrier frequency. Then, two amplitude modulations (AM1 & AM2) at two different frequencies above and below the contact resonance frequency can be applied to the carrier frequency. The resulting drive signal to the actuator now contains five different frequencies, namely: carrier, carrier+AM1, carrier-AM1, carrier+AM2, carrier - AM2. Through nonlinear interactions of the probe with the surface, the detected signal from the probe can be measured and demodulated at frequency AM1 & AM2. The contact resonance frequency is assumed to be centrally between frequencies AM1 & AM2, resulting in equal demodulated signal amplitudes detected from the probe at frequencies AM1 & AM2. Any measured change in the difference between the demodulated signal amplitudes at frequencies AM1&AM2 would indicate a change in contact resonance frequency. Using a feedback loop, the modulation frequencies AM1 & AM2 on the carrier frequency can be adjusted to keep the difference in the measured demodulated signal amplitudes at frequencies AM1 & AM2 constant during the measurement. In order to map subsurface features, the change in contact resonance as a function of position on the sample surface is recorded. Thus using the readout signal in a feedback loop with the actuator's amplitude modulation frequencies frequency tracking of the contact resonance frequency can be performed.

Optionally, the photo-thermal actuator comprises an adjustment unit configured to adjust the optical excitation beam incident on the cantilever. This enables adjustment of the excitation of the cantilever so that different forces of the probe tip inducing on the sample surface during contact can be obtained. In this way, the optical excitation beam can be tuned for performing non-destructive characterization of the sample. Adjusting the optical excitation beam may involve adjusting properties of the beam, location of the beam on the cantilever, focusing of the beam, etc. A combination is also possible. It is also envisaged that a plurality of optical excitation beams are used for exciting the probe.

Optionally, the adjustment unit is configured to adjust the level of focus of the optical excitation beam incident on the cantilever. In this way, a focus point can be changed for adjusting the level of focus of the optical excitation beam incident on the cantilever, for instance between a substantially in-focus state and a substantially out-of-focus state. A movable focusing lens and/or adaptive optics can be used for changing the level of focus.

Optionally, the adjustment unit is configured to adjust an impinging position of the optical excitation beam incident on the cantilever. By changing the (focus) position of the optical excitation beam impinging on the cantilever, the bending of the cantilever can be changed.

Monitoring or sensing of the acoustic output signal can be performed by making an optical sensing beam incident on the probe tip and sensing a reflected beam of the optical sensing beam using an optical sensor. Optionally, the optical sensing beam is further employed for photo-thermally actuating the cantilever. Hence, monitoring and actuation may be carried out by a same optical unit of the AFM. In an example, the optical sensing beam is configured to comprise a time varying optical power, wherein the optical sensing beam also forms said optical excitation beam for inducing the vibrations in the probe tip using the actuation signal.

It is appreciated that optical sensing and photo-thermal excitation can be separated. For example, optical sensing and photo-thermal excitation may occur on different locations on the cantilever of the probe.

The movement of cantilever of the probe in photo-thermal excitation by the photo-thermal actuator can depend on a thermal expansion of the cantilever due to heating of the cantilever. The heating may be a result of an optical energy from the optical excitation beam (e.g. laser light) that is absorbed by the cantilever.

Optionally, the probe is made of at least one material being shaped for inducing a directional deformation upon thermal expansion, and/or wherein the probe is made of at least two materials having different thermal expansion coefficients.

Optionally, the probe is made of a bi-metal configured to bend as a function of heating caused by the photo-thermal actuator.

A bi-metal is a heat sensitive structure which can be configured to convert incident radiation or heat coming from the photo-thermal actuator into a mechanical deformation or vibration. A bi-metal probe can provide a high sensitivity and is suitable for high frequency thermal modulation. A bimetal typically is made of first material with a thin film of second material on one side. It can undergo measurable bending in response to temperature changes, i.e. bimetallic effect. A differential stress in the cantilever of the probe is created due to dissimilar thermal expansion coefficients of the first material and the second material, which results in bending of the cantilever upon heating thereof by the optical excitation beam. Varying the amount of optical energy received by the cantilever thereby enables to control the probe's deflection. This enables to cause the cantilever to move towards or away from the surface of the sample, as well as to apply vibrations to the probe at various frequencies.

Optionally, the optical excitation beam is moved in one or more dimensions for varying the intensity or power of the optical excitation beam for exciting the probe.

Optionally, the photo-thermally excited probe comprises a coating on the cantilever. Bending of the probe may be caused by thermal expansion coefficient differences between the coating material and the probe material. The reflectivity of the coating of the probe may be tuned appropriately.

Optionally, at least during approach of the probe tip towards the sample surface, a resonant frequency is applied to the probe by means of the actuator, wherein an amplitude, phase and/or absolute frequency of the probe tip is measured for determining whether the probe tip is in contact with the surface of the sample. An influence of the sample surface can be sensed by determining a deviation of the amplitude, phase or absolute frequency of the probe tip operating in a resonant vibration amplitude. When the probe tip is approaching the sample surface, the free air resonance frequency changes, and hence the amplitude, phase and absolute frequency of the probe tip can also change.

According to a further aspect, the invention relates to an atomic force microscopy system for performing characterization of a sample, the system comprising a probe including a cantilever and a probe tip arranged on the cantilever, and wherein the system is configured for positioning the probe tip relative to the sample, the system comprising: an actuator configured to actuate the probe for causing movement of the probe tip, a controller configured to provide an actuation signal to the probe using the actuator for inducing movement between the probe tip and the sample in a direction towards and away from the sample for enabling contact between the probe tip and a surface of the sample, wherein at least during a portion of contact between the probe tip and the surface of the sample the actuation signal is adapted to vibrate the probe tip at at least one modulation frequency, and a detector configured to detect a deflection of the probe tip, wherein an output signal indicative of a probe tip motion is obtained by monitoring the probe tip position, wherein the controller is arranged for determining, using the output signal, at least a subsurface characterization data, wherein the actuator is a photo-thermal actuator configured to excite the probe by means of an optical excitation beam incident on the cantilever, wherein the probe is configured to deform as a function of heating caused by the optical excitation beam impinging on the probe, wherein the movement in a direction towards and away from the sample for enabling contact between the probe tip and the surface of the sample, and vibration of the probe tip at at least one modulation frequency are both carried out by means of the photo-thermal actuator.

Advantageously, the photo-thermal actuator can be used for both approaching and vibrating the probe tip with respect to the sample. A 'cleaner' and/or more predictable movement of the probe tip can be obtained, while only one actuator is used. Instead of using a separate actuator (e.g. piezo) to move to the surface, and a separate different actuator (e.g. piezo) to vibrate the probe tip while in contact with the surface, an actuation signal can be provided to a single photo-thermal actuator, employing an optical excitation beam (e.g. laser power) for merging the actuation for movement to the surface and the vibration during contact (cf. modulation frequency) together.

Upon contact, a modulation/vibration can be applied to the probe tip to change the applied pressure on the surface to make a subsurface measurement. For this purpose the cantilever is excited with the photo-thermal actuator by employing an AC component. Also the absolute position of cantilever with respect to the sample surface can be changed by means of the same photo-thermal actuator, by modifying a DC component.

Optionally, the probe tip is brought in and out contact with the sample surface per pixel. Hence, per pixel, the probe tip can be placed on the surface and removed by means of the photo-thermal actuator.

The optical excitation beam may be configured to induce a light sensitive change to one or more specific portions of the probe. Although this is described to be a photo-thermal change, it may also involve at least one of a photochemical, pyroelectric or photovoltaic change to one or more specific portions of the probe. The optical excitation beam may be visible or invisible light. Light with a variety of suitable wavelengths may be used.

It is appreciated that the probe tip can have various shapes and forms. It can for instance be cone shaped or pyramid shaped. Various other shapes are also envisaged.

According to a further aspect, the invention relates to a metrology system, such as a wafer metrology system, comprising the atomic force microscopy system according to the invention.

According to a further aspect, the invention relates to a lithographic system for manufacturing of a multilayer semiconductor device, the system comprising the atomic force microscopy system according to the invention. In an example, the lithographic system is arranged to manufacture a semiconductor device in mutually subsequent manufacturing stages, at least comprising a first manufacturing stage and a second manufacturing stage, wherein the atomic force microscopy device is arranged to inspect a semi-finished product obtained in said first manufacturing stage and to provide an analysis signal indicative for topography and positions of sub-surface features in said semi-finished product and wherein the lithographic system is arranged to use the analysis signal for overlay and/or alignment of the sample in the second manufacturing stage.

The lithographic system may for example be applied for manufacturing of 3D memory devices (e.g. NAND). Such devices may have a large plurality of layers e.g. more than fifty or even more than hundred layers and a thickness of several microns. Also application is conceivable for other nanotechnology products such as 3D transistors and future quantum electronics.

It is appreciated that the sample may have various forms and shapes. For example, it may be layered device or a layered semi-finished product. A layered semi-finished product is for example semi-finished multilayer semiconductor device that comprises a device layer and a resist layer covering one or more layers including the device layer. In such a device or product a first and/or a second layer may be deliberately patterned in a manufacturing process. Alternatively or additionally, the method may be used to detect undesired patterns or voids resulting from defects and/or stressed regions in layers that were intended to be patterned or not patterned. The results of such detection may be used to control a manufacturing process or for a quality inspection of manufactured products.

It is appreciated that the method and system can be used in various fields and areas, such as non-destructive three-dimensional metrology, nano-mechanical measurements for determining stiffness, in-situ overlay measurements, device inspections, wafer or semiconductor characterization, composition analysis on layers and features below the surface, assessment of mechanical and/or chemical properties of subsurface features, etc.

It will be appreciated that relational terms such as "first", "second", "third", and the like, as used herein, may be used solely to distinguish one entity or action from another entity or action without necessarily requiring or implying any actual such relationship, order, quantity or importance between such entities or actions.

It will be appreciated that any of the aspects, features and options described in view of the method apply equally to the described system. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a system;
Fig. 2 shows frequency response plots;
Fig. 3 shows a schematic diagram of embodiments of a system;
Fig. 4 shows an actuation signal and a resulting movement of the probe tip;
Fig. 5 shows a cross-sectional schematic view of a probe tip in contact with a sample; and
Fig. 6 shows a schematic diagram of a method.

### DETAILED DESCRIPTION

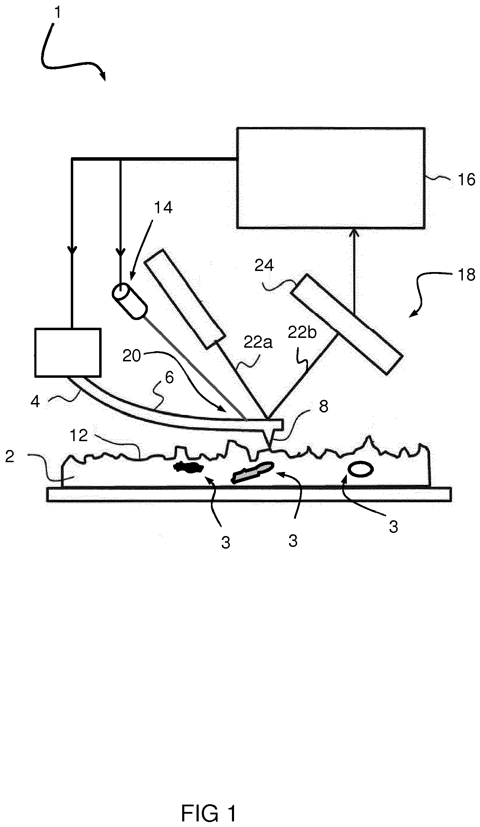

Fig. 1 shows an atomic force microscopy system 1 for performing characterization of a sample 2. The system 1 comprises a probe 4 including a cantilever 6 and a probe tip 8 arranged on the cantilever 6. The system 1 is configured for positioning the probe tip 8 relative to the sample 2. Further, the system 1 comprises an actuator 14 configured to actuate the probe 4 for causing motion of the cantilever 6 and thus the probe tip 8. Further, the system 1 comprises a controller 16 configured to provide a actuation signal to the actuator 14 to induce movement between the probe tip 8 and the sample 2 for enabling contact between the probe tip 8 and a surface 12 of the sample 2. At least during a portion of contact between the probe tip and the surface of the sample the actuation signal is adapted to vibrate the probe tip at at least one modulation frequency. The system 1 further includes a detector 18 configured to detect a position of the probe tip 8, wherein an output signal indicative of a probe tip motion is obtained by monitoring the probe tip position. The controller 16 is arranged for determining, using the output signal, at least a subsurface characterization data. The actuator 14 is a photo-thermal actuator 14 configured to excite the probe 4 by means of an optical excitation beam 20 incident on the cantilever 6. The probe 4 is configured to deform as a function of heating caused by the optical excitation beam 20 impinging on the probe 4. The shown sample 2 includes a number of sub-surface structures 3, which can be of any arbitrary shape, structure, material, or size.

Shear stresses can be reduced or eliminated when the probe 4 is not operated in continuous contact mode. By means of the photo-thermal actuator 14, an improved actuation can be obtained improving the SNR and/or avoiding or reducing unwanted resonances in the frequency response. Also a larger excitation frequency range can be obtained.

A light source, such as a laser, may be used as the photo-thermal actuator 14. Optionally, the actuation signal has a sinusoidal waveform at the at least one modulation frequency. The probe 4 can be configured to bend as function of heating. For instance, the probe 4 can be a bi-metal, which can be configured to deflect when actuated by means of a photo-thermal actuator 14, e.g. a laser focusing the optical excitation beam 20 on a surface of the bi-metal probe 4. Other probes 4 which are sensitive for photo-thermal excitation can also be used. For example, the cantilever can be shaped for inducing significant directed deformation upon thermal expansion. A combination of shape and material selection may also be employed.

The probe 4 is actuated by means of the photo-thermal actuator 14 for allowing the probe tip 8 to approach the sample surface 12. In this example, the photo-thermal actuator 14 can warm a portion of the probe 4 resulting in a bending movement towards the sample surface 12. For this purpose, the photo-thermal actuator 14 may provide a bias for bringing the probe tip 8 in contact with the sample surface 12, enabling interaction. The bias may for example form a non alternating component (e.g. DC) in the actuation signal. An alternating component at at least one modulation frequency may be provided during at least a portion of contact between the probe tip 8 and the sample surface 12 for enabling at least subsurface characterization of the sample. By taking away the bias, the probe tip 8 may move away from the sample surface 12.

It will be appreciated that the heating induced by means of the optical excitation beam from the photo-thermal actuator can also result in a retracting movement.

A bias provided by the photo-thermal actuator 14 configured to bend the probe such that the probe tip comes in contact with the sample surface 12 may also be applied at different times, for example per pixel during characterization measurement. The bending frequency of the probe can be determined by the excitation provided by the photo-thermal actuator 14. This can be controlled by means of the actuation signal. Hence, the bias may be provided in the form of a step function in the actuation signal, wherein at least a portion of the step function includes at least one portion including at least one modulation frequency.

In an example, movement of probe tip 8 is induced by means of an optical excitation beam 20 having a time varying optical power incident on the cantilever 6. By means of a constant component in the actuation signal, the cantilever may be bent such that the probe tip 8 is brought in contact with the sample surface 12. The optical excitation beam 20 having the time varying optical power can enable a photo thermal excitation of the probe 4 for inducing vibrations at at least one modulation frequency. In an example the probe tip is intermittently or periodically brought in contact with the sample surface at different locations of the surface of the sample (per pixel) for performing characterization or imaging. An optical excitation beam 20 may consist of a laser (or other) optical beam having an adjustable/controllable intensity. The intensity or the power of the beam may be adjusted/varied based on the actuation signal provided to the actuator 14. Thermal effects in the probe 4 can cause the probe tip to start vibrating with the frequency applied via the optical excitation beam 20.

The output signal can be sensed in different ways. In the shown example of fig. 1, the position of the probe tip 8 is monitored using an optical detector 18, which is configured to provide an optical sensing beam 22a incident on or near the probe tip 8 and sensing a reflected beam 22b of the optical sensing beam 22a using an optical sensor 24. Hence, the probe tip 8 movements can be monitored using the incident optical beam 22a that is reflected at the probe tip 8 and detected by the optical sensor 24. The motion of the probe tip 8 results in a variation of the reflection angle of the reflected beam 22b, which results in a variation of the location of the reflected beam 22b on the optical sensor 24. This variation on the optical sensor 24 can be detected and analyzed as being the output signal of the system 1. In this example, the optical sensing beam 22a is used independent of the optical excitation beam 20. In an example (not shown), the optical excitation beam 20 which is incident on or near the probe tip 8 may also be used as the optical sensing beam 22a, by sensing the reflection of the optical excitation beam 20 by the optical sensor 24 of the system 1.

The actuation signal can be free of at least one modulation frequency (e.g. ultrasound frequency) when the probe tip is not contacting the sample.

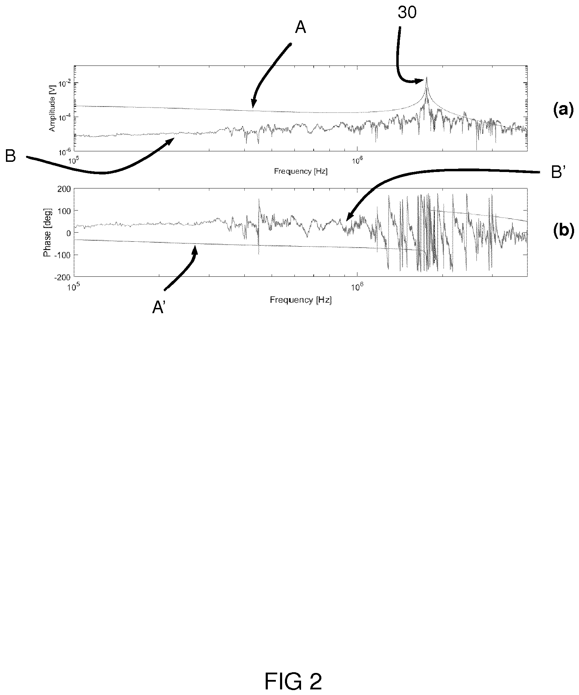

Fig. 2 shows frequency response plots in which the amplitude and phase of the probe are plotted in function of the excitation frequency. The frequency response plots for the amplitude of the cantilever at the probe tip 8 excited by means of a photo-thermal actuator 14 and by means of a piezoelectric actuation are depicted by A, B, respectively. The resulting phases of the response of the cantilever 6 at the probe tip 8 when excited by means of a photo-thermal actuator 14 and by means of a piezoelectric actuation are depicted by A', B', respectively. The excitation energy put in the cantilever might differ between the two cases. As can be observed, a more smooth frequency response is obtained when the photo-thermal actuator 14 is employed for exciting the cantilever 6 of the probe 4. The frequency spectra obtained with photo-thermal actuation are free of spurious peaks. Excitation of unwanted vibration modes of the probe 4 can be significantly reduced or avoided by using the photo-thermal actuator 14. Advantageously, in this way, compared to i.a. a piezoelectric actuation (cf. plots B, B'), a cleaner and smoother frequency response spectrum and phase measurement of the excited probe can be obtained. Moreover, a higher resolution subsurface imaging may be obtained by means of the photo-thermal actuator 14. The photo-thermal actuator 14 can have a larger excitation frequency range (e.g. up to GHz and above) than other types of actuators, including a piezoelectric actuator (typically can reach GHz). The photo-thermal actuator 14 provides a clean, stable and a frequency independent drive for the cantilever 6 of the probe 4.

Piezoelectric excitation clearly suffers from a plurality of unwanted peaks in the transfer function between the excitation voltage and the mechanical motion. These peaks are caused by spurious resonances in the coupled mechanical system. As a result of a mechanical coupling between piezoelectric actuator and the cantilever, the mounted piezoelectric actuator becomes part of a larger mechanical system having a more complex frequency response. The peaks may for example be not reproducible making the measurement result unreliable. Moreover, piezoelectric actuation can be strongly frequency-dependent. The excitation provided by the photo-thermal actuator 14 can provide a transfer function from excitation voltage to mechanical motion that is substantially independent of frequency and substantially free from spurious resonances. The photo-thermal actuator 14 may directly excite only the probe. The photo-thermal actuator 14 drives no other system resonances, so there are reduced or no unwanted peaks in the frequency response.

As can be seen in the frequency response employing the piezoelectric actuator, the response can be highly variable and not sufficiently flat so that the response of the cantilever changes at different frequencies; not only as a function of sample properties but also as a function of the response. Such distortions can negatively impact accuracy and stability among other things. In the frequency response, the cantilever can have a plurality of peaks at different eigen frequencies of torsional and flexural modes. In the frequency response employing the photo-thermal actuator 14, instead of a plurality of (unwanted) peaks, there is a single resonance peak 30 observed for the identified single resonance frequency of the cantilever (e.g. first resonance frequency). Hence, advantageously, by means of the photo-thermal actuation there are no spurious peaks coming from resonances resulting from the excited cantilever chip/holder assembly. The cantilever amplitude can remain more stable over time and tuning the cantilever resonance can be facilitated.

The actuation signal provided to the photo-thermal actuator 14 results in a modulated focused light, i.e. optical excitation beam 20, used for actuating the probe 4. The modulated light may for instance be focused on the probe, wherein the probe is configured to bend as a function of the light (e.g. as a result of heating). The modulated light may have an oscillation amplitude which can be controlled by means of changing a light intensity, a focus level (e.g. focus point for switching between in-focus and out-of-focus), and/or focus position on the probe. A technical advantage is that subsurface imaging can be obtained by direct probe excitation including bringing the probe tip in contact with the sample surface and at least during a time interval during contact between the probe tip and the sample surface provide at least one modulation frequency f1 in the actuation signal.

The photo-thermal actuator 14 may comprise an optical beam positioning unit which can be employed for heating certain parts of the cantilever 6 of the probe 4 to a varying degree. The photo-thermal actuator 14 may be configured to adjust the total optical power of the optical excitation beam 20 and the beam position relative to the probe 4 to control the temperature of a certain part of the cantilever 6 of the probe 4, such as the probe tip 8. Furthermore, the location of the optical excitation beam 20 on the probe used for photo-thermal excitation affects the drive amplitude of the probe 4. Since the probe 4 has a frequency response which can include of a plurality of normal and torsional eigenmodes (depending on the boundaries, geometrical parameters and material properties), the relationship between location of the optical excitation beam 20 on the probe and the drive amplitude is also frequency dependent.

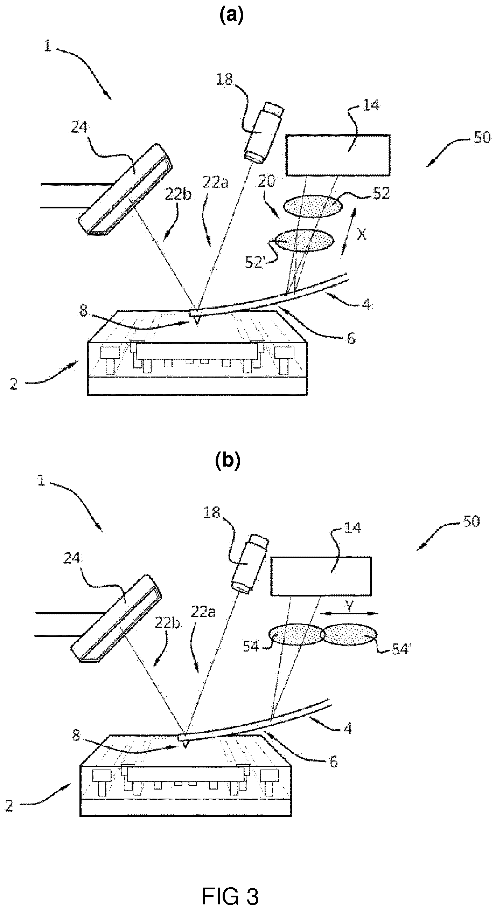

Fig. 3 shows a schematic diagram of two embodiments of a system 1. The probe tip 8 is positioned relative to the sample 2 for enabling contact between the probe tip 8 and a surface of the sample 2. The position of the probe tip 8 is monitored by means of the optical detector 18 which transmits the optical sensing beam 22a to a target area on or near the probe tip 8 and senses the reflected beam 22b using the optical sensor 24. The variation of the reflection angle of the reflected beam 22b on the optical sensor 24 is detected and analyzed as being the output signal of the system 1 indicative of the motion of the probe 4. The system 1 further comprises a photo-thermal actuator 14 comprising an adjustment unit 50 configured to adjust the optical excitation beam 20 incident on the cantilever 6. The adjustment unit 50 is configured to adjust the level of focus of the optical excitation beam 20 incident on the cantilever 6. By controlling the level of focus of the optical excitation beam 20 on the cantilever 6, the excitation of the cantilever 6 can be adjusted.

In the shown embodiment of fig. 3(a), the adjustment unit 50 comprises a lens 52 which is configured to be movable in at least one adjustment direction X1 substantially along a path of the optical excitation beam 20 transmitted to the cantilever 6. The lens 52 can act as a focusing lens which is arranged to change the level of focus. At a predetermined position of the lens 52, the optical excitation beam 20 may be in-focus. Movement of the lens 52 along the adjustment direction X1 (shown as lens 52') can bring the optical excitation beam 20 incident on the cantilever 6 substantially out of focus, changing the level of excitation of the probe 4. Many variants are possible. For instance, in an example, a plurality of lenses may be arranged, wherein at least a first lens and a second lens are configured to be movable with respect to each other in at least a direction substantially along the optical excitation beam 20 transmitted to the cantilever 6. Also in this way, the level of focus of the optical excitation beam 20 can be adjusted, enabling accurate excitation of the probe 4.

In the shown embodiment of fig. 3(b), the adjustment unit 50 is configured to adjust the level of focus of the optical excitation beam 20 by changing the position of a lens 54 in at least one adjustment direction Y such as to bring the lens in and out of the path of the optical excitation beam 20 directed towards the cantilever 6 of the probe 4. The lens 54 may be a focusing lens configured to bring the optical excitation beam 20 in focus on the cantilever 4 when present in the path of said optical excitation beam 20. Removing the lens 54 from the optical path of the optical excitation beam 20 (shown as lens 54'), can bring it out of focus on the cantilever 4.

Additionally or alternatively, the impinging position of the optical excitation beam 20 incident on the cantilever can be adjustable, for instance by means of the adjustment unit 50. By changing the (focus) position of the optical excitation beam impinging on the cantilever, the bending of the cantilever can be controlled. Also the intensity of the optical excitation beam 20 may be adjustable. A combination of adjustment mechanisms may also be employed for enabling accurate excitation of the probe 4. Many variants are possible. In an example (not shown), the excitation and sensing of the probe tip position/motion is combined in a unitary optical unit having means to sense a reflected beam of the optical sensing beam using an optical sensor and simultaneously actuate the probe by adjusting the optical excitation beam 20 (e.g. focus, intensity, position on cantilever, or combination).

By inducing the vibrations resulting from the photo-thermal actuator 14 solely in the probe 4 (cf. 'top side' actuation), it can be avoided that a sample handling system needs to be modified. Therewith, a risk of backside contamination of the sample can be avoided, which can be important for example for wafers in the semiconductor industry. In this way, use of a coupling medium, which is required in case of bottom excitation to couple the sample 2 to the (sample) transducer, is obviated. Furthermore, the photo-thermal actuator 14 used for excitation of the probe can generally be smaller than one to be used for excitation of the sample (typically acoustic or piezoelectric). Also, the actuation efficiency of the probe tip 8 can be higher as the vibrations are directly applied to the cantilever 6 of the probe 4.

In the shown embodiments of fig. 3, the sample 2 is wafer or a semiconductor device comprising a stack of device layers including at least a first layer and a second layer. The sample is a semi-finished multilayer semiconductor device that comprises a patterned device layer and a resist layer covering one or more layers including the patterned device layer.

The photo-thermal actuator 14 can result in a more accurate or smoother actuation which is needed for performing subsurface characterization of the sample, for instance employing subsurface ultrasonic resonance force microscopy.

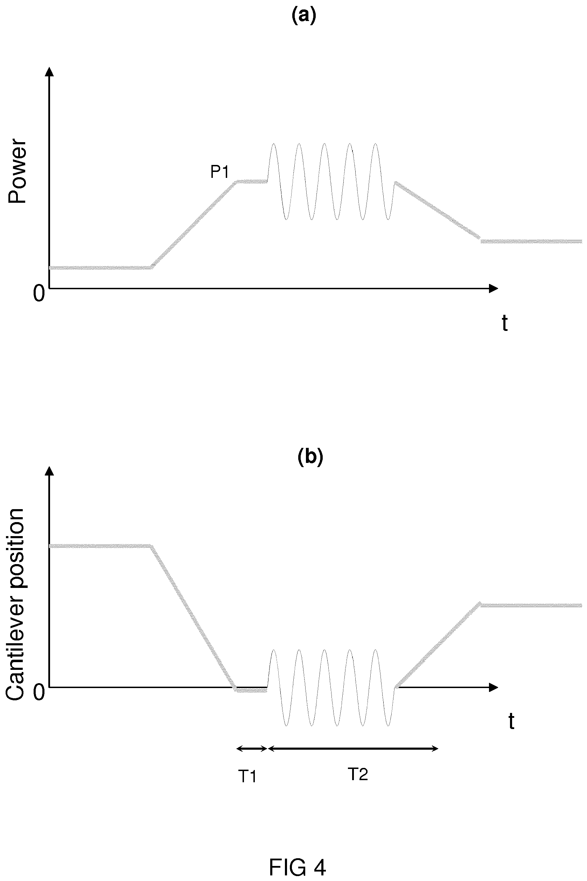

Fig. 4 shows an actuation signal and a resulting movement of the probe tip 8 resulting from said actuation signal. In the shown graph in fig. 4(a), the power of the optical excitation beam 20 (vertical axis) is depicted in function of time (horizontal axis). In this example, the excitation is controlled by means of varying the power output from the photo-thermal actuator 14, i.e. cf. intensity of the optical excitation beam 20. The power of the optical excitation beam 20 may be controlled by means of the actuation signal provided to the photo-thermal actuator 14. The power is first increased to a first power PI, resulting in a first amplitude of the probe tip 8. At the first amplitude, the probe tip 8 is in contact with the sample surface 12. At least during contact, the actuation signal is configured to provide the at least one modulation frequency f1. The at least one modulation frequency f1 may correspond to a contact resonance frequency. The at least one modulation frequency f1 is used for determining subsurface characterization data of the sample 2. In the shown graph in fig. 4(b), a position of the probe tip 8 (vertical axis) is depicted in function of time (horizontal axis), resulting from the photo-thermal excitation using an optical excitation beam having a power as shown in fig. 4(a). A position 0 depicts the surface of the sample 2. As a result of an increasing power, the cantilever 6 of the probe 4 is bent towards the sample 2. The cantilever 6 is moved down until a setpoint is reached. A first time interval T1 is used for performing surface measurement and a second time interval T2 is used for performing a subsurface measurement, wherein during the second time interval T2, the probe 4 is excited at the at least one modulation frequency f1. It is appreciated that in an example, surface measurements using the first time interval T1 are not carried out (e.g. only including second time interval T2 for performing measurements).

Approach (i.e. moving the cantilever 6 towards the sample surface) and contact modulation at the at least one modulation frequency f1, are both performed using the photo-thermal actuator 14. The approach may involve an arbitrary movement and does not have to be periodic or in resonance with the free air resonance of the cantilever. Hence, in an example, the movement of the probe tip 8 with respect to the sample 2 can be slower than the free air resonance (cf. non-resonant measurement technique). When in contact, the optical excitation beam 20 can be modulated at contact resonance frequency as at least one modulation frequency f1 to obtain subsurface image. Next to the fact that both movement and modulation can be done with one actuator 14, in an advantageous way, the photo-thermal actuator 14 can yield clean contact resonance spectra and/or allow for arbitrary waveforms to move the cantilever 6 up and down with respect to the sample 2.

Advantageously, by moving the probe tip 8 up and down with respect to the sample 2 and performing intermittent measurements (cf. per pixel) during at least a portion of contact between the probe tip 8 and the sample 2, shear stress can be reduced. In this way, the risk of damaging the sample 2 during measurements can be reduced.

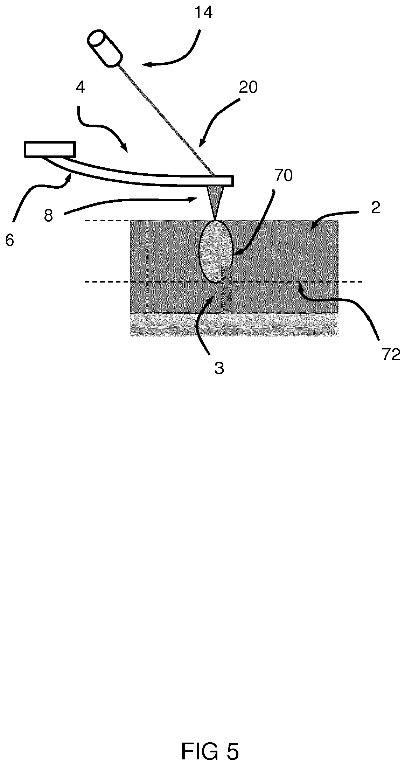

Fig. 5 shows a schematic diagram of a probe tip 8 in contact with a sample 2. During contact, depth information from the subsurface can be determined. As a result of the actuation of the probe tip 8, a tip-sample contact force is obtained resulting in a stress field 70 induced in the sample. The induced stress field 70 determines a probing depth 72. In this way, subsurface features to a certain desired probing depth 72 can be characterized. The probing depth 72 can i.a. depend on the material hardness of the sample. Different types of samples can be measured in a non-destructive manner. For example, in case a resist sample is measured, a lower force may be applied (thus applying a lower probe tip amplitude) than compared to a harder sample. In this way, a wide variety of samples can be characterized, wherein the interaction between the probe tip 8 and the sample 2 is tuned to the material of the sample which is to be characterized in order to avoid or reduce the risk of damage. The photo-thermal actuator 14 provides a top excitation for direct actuation of the probe by means of light. Advantageously, the sensitivity, measurement accuracy and/or spatial resolution for at least subsurface characterization can be improved in this manner.

As already indicated above, there are different ways to influence the oscillation amplitude of the cantilever, for example, by varying the intensity of the laser by varying a spot location of the optical excitation beam on the cantilever or varying the focus point of the optical excitation beam. In this way, the stress field can be adjusted enabling non-destructive characterization of different samples having different material properties (e.g. elastic properties).

All movements, except large Z-stroke, may be carried out by means of the photo-thermal actuator 14. The probe tip 8 can be moved towards and away from the sample surface 12, but also modulations/vibrations are performed with photo-thermal stimulation of the probe 4. In this way, a much better control can be obtained. For instance, it may no longer be needed to move a holder of the cantilever 4 for bringing the probe tip 8 in contact with the sample surface 12. Instead, the probe tip 8 can be brought in contact with the sample surface 12 by means of deforming the cantilever 6 using the photo-thermal actuator 14. As only the cantilever 6 is deformed for moving it towards and away from the sample surface, for enabling contact and non-contact, instead of moving the probe holder and the probe (Z-stroke), a better control can be obtained and/or a measured response signal obtained by means of the detector can become a lot sharper (no or less spurious peaks).

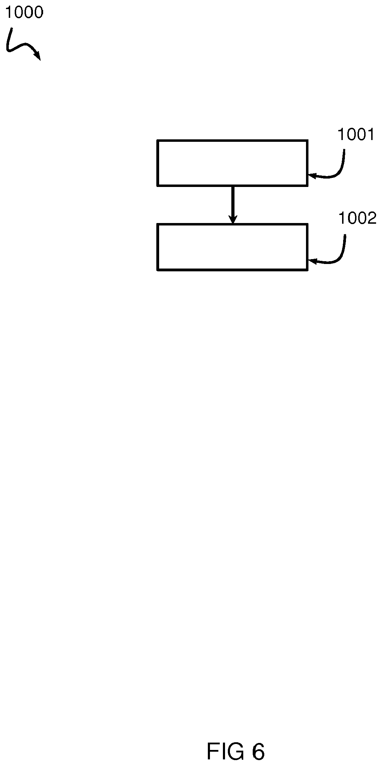

Fig. 6 shows a schematic diagram of a method 1000 for performing characterization of a sample 2 using an atomic force microscopy system 1 comprising a probe 4 including a cantilever 6 and a probe tip 8 arranged on the cantilever 6, and a detector 18 for sensing a probe tip position and wherein the system is configured for positioning the probe tip 8 relative to the sample 2 for enabling contact between the probe tip 8 and a surface of the sample 12. In a first step 1001, an actuation signal is generated for operating the probe by means of an actuator. The actuation signal is provided to the probe using an actuator for inducing movement between the probe tip and the sample in a direction towards and away from the sample for enabling contact between the probe tip and a surface of the sample. At least during a portion of contact between the probe tip and the surface of the sample the actuation signal is adapted to vibrate the probe tip at at least one modulation frequency. In a second step 1002, the probe tip position is monitored for obtaining an output signal indicative of a probe tip motion, for determining, using the output signal, at least a subsurface characterization data. The actuator is a photo-thermal actuator configured to excite the probe by means of an optical excitation beam incident on the cantilever. The probe is configured to deform as a function of heating caused by the optical excitation beam impinging on the probe, wherein the movement in a direction towards and away from the sample for enabling contact between the probe tip and the surface of the sample, and vibration of the probe tip at at least one modulation frequency are both carried out by means of the photo-thermal actuator.

The approach/retract movement of the probe tip towards and away from the sample surface (cf. moving up and down with respect to the sample surface per pixel), and additionally the modulation/vibration of the probe tip can be carried out by a same photo-thermal actuator.

Hence, by means of the photo-thermal actuator 14 provided with a actuation signal including at least one modulation frequency f1 (modulation)a subsurface characterization can be performed. By means of the photo-thermal actuation, a clean frequency spectrum can be obtained enabling quantitative subsurface measurements. Furthermore, since a top actuation is employed, there is no longer a need for a wafer stage modification. Also an improved resolution and SNR can be obtained by means of the photo-thermal actuator 14.

The probe tip 8 can approach the sample and reach a set point at which surface topography of a pixel is recorded. After the surface topography is recorded, a modulation is employed, for instance in the form of an acoustic wave signal, for recording amplitude or phase of subsurface. After a subsurface measurement, the probe tip can be retracted to a predefined distance. The probe or sample can then be moved to perform the same steps on a next pixel.

It is appreciated that photo-thermal excitation of the probe may also be used in conjunction with other actuation methods.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the spirit and scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. Method of performing characterization of a sample using an atomic force microscopy system comprising a probe including a cantilever and a probe tip arranged on the cantilever, and a detector for sensing a probe tip position, and wherein the system is configured for positioning the probe tip relative to the sample, wherein the method comprises the steps of:
providing an actuation signal to the probe using an actuator for inducing movement between the probe tip and the sample in a direction towards and away from the sample for enabling contact between the probe tip and a surface of the sample, wherein at least during a portion of contact between the probe tip and the surface of the sample the actuation signal is modulated by at least one frequency to vibrate the probe tip at at least one modulation frequency, and
monitoring the probe tip position for obtaining an output signal indicative of a probe tip motion, for determining, using the output signal, at least a subsurface characterization data,
wherein the actuator is a photo-thermal actuator configured to excite the probe by means of an optical excitation beam incident on the cantilever, wherein the probe is configured to deform as a function of heating caused by the optical excitation beam impinging on the probe,
wherein the movement in a direction towards and away from the sample for enabling contact between the probe tip and the surface of the sample, and vibration of the probe tip at at least one modulation frequency are both carried out by means of the photo-thermal actuator.

2. Method according to claim 1, wherein, during contact of the probe tip with the surface of the sample, a first time interval is used for performing topography characterization and a second time interval is used for performing subsurface characterization, the first time interval being different than the second time interval, wherein during the second time interval the actuation signal includes at least one modulation frequency.

3. Method according to claim 1 or 2, wherein during contact more than two time intervals are defined, wherein during at least two time intervals modulations of different frequencies are applied to the actuation signal.

4. Method according to claim 2 or 3, wherein at least a third interval is used for performing subsurface characterization, the third interval being different than the first and second time interval, wherein during the third time interval the actuation signal includes a frequency being different than at least one modulation frequency in the second time interval.

5. Method according to any one of the preceding claims, wherein during contact between the probe tip and the sample surface, the actuation signal is configured for changing a contact force between the probe tip and the sample for enabling subsurface characterization at a plurality of depths underneath the surface.

6. Method according to any one of the preceding claims, wherein during at least one interval during contact of the probe tip with the surface of the sample a plurality of modulation frequencies are applied simultaneously.

7. Method according to any one of the claims 4, 5 or 6, wherein during the third interval a depth of subsurface characterization is adjusted to a desired value by changing at least one modulation frequency and/or an oscillation amplitude of the vibration at at least one modulation frequency.

8. Method according to any one of the preceding claims, wherein at least one of the at least one modulation frequency is varied in time in order to perform frequency tracking of the contact resonance frequency.

9. Method according to any one of the preceding claims, wherein the photo-thermal actuator comprises an adjustment unit configured to adjust the optical excitation beam incident on the cantilever.

10. Method according to claim 9, wherein the adjustment unit is configured to adjust the level of focus of the optical excitation beam incident on the cantilever.

11. Method according to claim 9 or 10, wherein the adjustment unit is configured to adjust an impinging position of the optical excitation beam incident on the cantilever.

12. Method according to any one of the preceding claims, wherein the probe is made of at least one material being shaped for inducing a directional deformation upon thermal expansion, and/or wherein the probe is made of at least two materials having different thermal expansion coefficients.

13. Method according to any one of the preceding claims, wherein at least during approach of the probe tip towards the sample surface, a resonant frequency is applied to the probe by means of the actuator, wherein an amplitude, a phase and/or an absolute vibration frequency of the probe tip is measured for determining whether the probe tip is in contact with the surface of the sample.

14. Atomic force microscopy system for performing characterization of a sample, the system comprising a probe including a cantilever and a probe tip arranged on the cantilever, and wherein the system is configured for positioning the probe tip relative to the sample, the system comprising:
an actuator configured to actuate the probe for causing movement of the probe tip,
a controller configured to provide an actuation signal to the probe using the actuator for inducing movement between the probe tip and the sample in a direction towards and away from the sample for enabling contact between the probe tip and a surface of the sample, wherein at least during a portion of contact between the probe tip and the surface of the sample the actuation signal is adapted to vibrate the probe tip at at least one modulation frequency, and
a detector configured to detect a deflection of the probe tip, wherein an output signal indicative of a probe tip motion is obtained by monitoring the probe tip position, wherein the controller is arranged for determining, using the output signal, at least a subsurface characterization data,
wherein the actuator is a photo-thermal actuator configured to excite the probe by means of an optical excitation beam incident on the cantilever, wherein the probe is configured to deform as a function of heating caused by the optical excitation beam impinging on the probe,
wherein the movement in a direction towards and away from the sample for enabling contact between the probe tip and the surface of the sample, and vibration of the probe tip at the at least one modulation frequency are both carried out by means of the photo-thermal actuator.

15. Lithographic system for manufacturing of a multilayer semiconductor device, the system comprising an atomic force microscopy system according to claim 14.
